# EUROPÄISCHE PATENTANMELDUNG

(11) **EP 2 899 014 A1**
(43) Veröffentlichungstag der Anmeldung: **29.07.2015**
(21) Anmeldenummer: 15152257.0
(22) Anmeldetag: 23.01.2015
(51) Int. Cl.: B29C 71/00, B29C 59/00, B29C 35/02, B65B 47/00, B65B 61/02, B65D 1/30, B65D 1/40, B65B 9/04, B29C 51/26

(54) **Tiefziehverpackungsmaschine mit Ultraschalleinrichtung**

(30) Priorität: 24.01.2014 DE 102014201329
(71) Anmelder: Multivac Sepp Haggenmüller GmbH & Co. KG, 87787 Wolfertschwenden (DE)
(72) Erfinder: Ruhland, Reinhard, 87730 Bad Grönenbach, DE (DE)
(74) Vertreter: Grünecker Patent- und Rechtsanwälte PartG mbB

(57) **Zusammenfassung**

Die Erfindung betrifft eine Tiefziehverpackungsmaschine (1) mit einer Ultraschalleinrichtung (20) und ein Verfahren, um die Folie (9) an einer Sollbruchlinie (23) mittels einer Sonotrode (21) zu erwärmen, so dass eine Umkristallisation der Folie (9) entlang der Sollbruchlinie (23) erfolgt.

## Beschreibung

Die Erfindung bezieht sich auf eine Tiefziehverpackungsmaschine gemäß dem Oberbegriff des Anspruchs 1.

Aus der Praxis sind verschiedene Verpackungen bekannt, die auf Tiefziehverpackungsmaschinen hergestellt werden und verschiedenartigste Öffnungshilfen aufweisen. Beispielsweise ist aus der WO 2008/092200 eine Verpackung bekannt, die eine Sollbruchlinie aufweist, um die Verpackung entlang dieser Sollbruchlinie aufbrechen zu können, um den Inhalt zugänglich zu machen. Das Material der Folie weist an der Sollbruchlinie eine besondere Struktur auf, die beispielsweise eine Materialschwächung sein kann.

Um Verpackungen solcher Art auch entlang einer Sollbruchlinie öffnen zu können, werden spröde Folien beispielsweise aus Polystyrol (PS) eingesetzt, um die Brucheigenschaft zu verbessern. Nachteilig an PS als Verpackungsmaterial ist der hohe Materialpreis, im Gegensatz zu beispielsweise PP, PET oder APET. PP, PET oder APET sind teilkristallin, bzw. weniger kristallin als PS, und weisen eine zu geringe Sprödigkeit auf, um für eine wie oben beschriebene Öffnungshilfe bzw. Sollbruchlinie eingesetzt werden zu können.

Aus der DE 102007021967 A1 und der DE 102008035994 A1 sind Anwendungen von Ultraschalleinrichtungen zum Siegeln und Schneiden von Folien auf Verpackungsmaschinen bekannt. Ultraschall bedeutet dabei auch im Rahmen der vorliegenden Erfindung Schwingungen mit einer Frequenz von mindestens 16 kHz.

Aufgabe der vorliegenden Erfindung ist es, eine Tiefziehverpackungsmaschine dahingehend zu verbessern, um unter Einsatz von Folien aus Materialien wie PP, PET oder APET Verpackungen mit einer Sollbruchlinie herstellen zu können.

Diese Aufgabe wird gelöst durch eine Tiefziehverpackungsmaschine mit den Merkmalen des Anspruchs 1 bzw. durch ein Verfahren zum Betrieb einer solchen Tiefziehverpackungsmaschine mit den Merkmalen des Anspruchs 9. Vorteilhafte Weiterbildungen der Erfindung sind in den Unteransprüchen angegeben.

Die erfindungsgemäße Tiefziehverpackungsmaschine umfasst eine Formstation zum Verformen einer Kunststofffolie, eine Siegelstation und eine Ultraschalleinrichtung, wobei die Ultraschalleinrichtung eine Sonotrode aufweist. Die Tiefziehverpackungsmaschine zeichnet sich dadurch aus, dass die Ultraschalleinrichtung in der Formstation oder in Produktionsrichtung nach der Formstation und vor der Siegelstation vorgesehen ist, um insbesondere eine wirksame Sollbruchlinie als Öffnungshilfe für die Verpackung nach dem Formvorgang zu erzeugen.

Vorzugsweise ist die Ultraschalleinrichtung dazu konfiguriert, die in der Formstation verformte Kunststofffolie lokal zu erwärmen und die kristalline Struktur der Folie lokal zu verändern, um so auch kostengünstige Folie verarbeiten zu können, die ohne diese Veränderung z. B. keine oder nur eine mangelhafte Sollbruchlinie aufweisen kann, da die Struktur der Folie dafür ohne die zusätzliche Bearbeitung nicht besonders gut geeignet ist. Bei der erfindungsgemäßen Ultraschallbehandlung wird der Kristallisationsgrad der Folie lokal erhöht.

Die Folie ist bevorzugt mittels der Sonotrode der Ultraschalleinrichtung auf eine Temperatur erwärmbar, die zu einer Umkristallisation der Folie führt. Die Umkristallisation, nämlich die Erhöhung des Kristallisationsgrads, an einer Sollbruchlinie führt dort lokal zu einer Erhöhung der Sprödigkeit der Folie und erleichtert dadurch ein Aufbrechen der Verpackung an der Sollbruchlinie. Damit kann die Sollbruchstelle eine sehr gute Öffnungshilfe darstellen.

Dabei liegt die bei der Ultraschallbehandlung erzeugte Temperatur in der Folie bevorzugt unter dem Schmelzpunkt der Folie.

In einer besonders vorteilhaften Ausführung weist die Temperatur bei der Erwärmung der Folie mittels der Sonotrode wenigstens 140°C, vorzugsweise 160°C, auf, um bei PP-, PET- oder APET-Folien eine entsprechende Umkristallisation erzeugen zu können.

Vorzugsweise weist die Sonotrode der Ultraschalleinrichtung eine schallabstrahlende Endfläche auf, die mit dem Verlauf der zu erzeugenden Sollbruchlinie kongruent ist.

Bevorzugt umfasst die Ultraschalleinrichtung ein Oberteil mit einer Drucklufteinrichtung, wobei das Oberteil oberhalb der Folie angeordnet ist, um die Folie mittels Druckluft an die schallabstrahlende Endfläche der Sonotrode zu drücken. Dies stellt eine einfache und kostengünstige Ausführung dar, vor allem wenn mehrere Sollbruchlinien gleichzeitig an mehreren Sonotroden bzw. an einem Ultraschallwerkzeug, das mit einer Sonotrode verbunden ist und für mehrere Sollbruchlinien konfiguriert ist, erzeugt werden. Die Druckluft oder ein Überdruck in der Mulde sorgt für eine gleichmäßige Druckverteilung der Folie an die schallabstrahlende Endfläche und somit auch für eine gleichmäßige Umkristallisation nur entlang der Sollbruchlinie.

In einer alternativen Ausführungsform weist die Ultraschalleinrichtung einen Amboss auf, um die Folie zwischen die abstrahlende Endfläche der Sonotrode und den Amboss zu klemmen. Dabei wirken jeweils eine Sonotrode und ein Amboss zusammen, um jeweils eine Sollbruchlinie zu erzeugen.

Ein erfindungsgemäßes Verfahren zum Betrieb der Tiefziehverpackungsmaschine, die eine Ultraschalleinrichtung umfasst, zeichnet sich dadurch aus, dass die Ultraschalleinrichtung eine Folie entlang einer Sollbruchlinie erwärmt, um die kristalline Struktur der Folie entlang der Sollbruchlinie zu verändern.

Besonders vorteilhaft ist das erfindungsgemäße Verfahren, wenn die Folie eine Polypropylenfolie (PP), eine Polyethylenterephthalatfolie (PET) oder speziell eine amorphe Polyethylenterephthalatfolie (APET) ist, da diese Folien kostengünstig sind und für Verpackungen sehr gut geeignet sind. Ohne das erfindungsgemäße Verfahren weisen diese Folien eine Sprödigkeit auf, die für eine Sollbruchstelle nicht geeignet ist.

Bevorzugt wird die Folie mittels der Sonotrode auf eine Temperatur von wenigstens 140°C, vorzugsweise 160°C, erwärmt, um die kristalline Struktur der Folie derart zu verändern, dass die Sprödigkeit oder Brüchigkeit an der Sollbruchlinie der Verpackung erhöht wird.

Die Erwärmung der Folie mittels der Ultraschalleinrichtung erfolgt vorzugsweise nach dem Erzeugen einer Mulde in die Folie, da nach dem Formprozess die Kontur der Sollbruchlinie geformt wurde und anschließend die lokale Erwärmung nur entlang der Sollbruchlinie zu einer geeigneten Öffnungshilfe führt.

Im Folgenden wird ein vorteilhaftes Ausführungsbeispiel der Erfindung anhand einer Zeichnung näher erläutert. Im Einzelnen zeigen:
- Fig. 1: eine erfindungsgemäße Tiefziehverpackungsmaschine in einer schematischen Seitenansicht,
- Fig. 2: eine Seitenansicht der Ultraschalleinrichtung,
- Fig. 3a: eine Schnittansicht durch die Ultraschalleinrichtung entgegen der Produktionsrichtung,
- Fig. 3b: eine Schnittansicht durch die Ultraschalleinrichtung in Arbeitsposition,
- Fig. 4a: eine Variante der Ultraschalleinrichtung mit einem Amboss und
- Fig. 4b: die Variante der Ultraschalleinrichtung in Arbeitsposition.

Gleiche Komponenten sind in den Figuren durchgängig mit gleichen Bezugszeichen versehen.

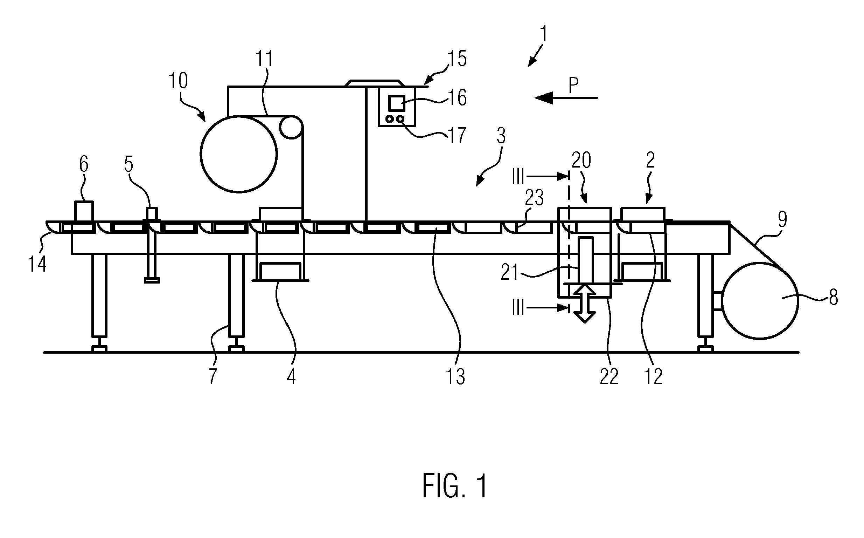

Figur 1 zeigt in einer schematischen Seitenansicht eine erfindungsgemäße Tiefziehverpackungsmaschine 1. Diese Tiefziehverpackungsmaschine 1 weist eine Formstation 2, eine Einlegestrecke 3, eine Siegelstation 4, eine Querschneideeinrichtung 5 und eine Längsschneideeinrichtung 6 auf, die in dieser Reihenfolge in einer Produktionsrichtung P an einem Maschinengestell 7 angeordnet sind. Eingangsseitig befindet sich an dem Maschinengestell 7 eine Zufuhrrolle 8, von der eine Folie 9 abgezogen wird. Im Bereich der Siegelstation 4 ist ein Materialspeicher 10 vorgesehen, von dem eine Oberfolie 11 abgezogen wird. Ferner weist die Tiefziehverpackungsmaschine 1 eine nicht näher dargestellte Vorschubeinrichtung auf, die die Folie 9 ergreift und diese pro Hauptarbeitstakt in der Produktionsrichtung P weitertransportiert. Die Vorschubeinrichtung kann zum Beispiel durch beidseitig angeordnete Transportketten bzw. Klammerketten ausgeführt sein.

In der dargestellten Ausführungsform ist die Formstation 2 als eine Tiefziehstation ausgebildet, bei der in die Folie 9 durch Tiefziehen Mulden 12 geformt werden. Dabei kann die Formstation 2 derart ausgebildet sein, dass in der Richtung senkrecht zur Transportrichtung R mehrere Mulden 12 nebeneinander gebildet werden. In der Einlegestrecke 3 werden die in der Unterfolie 9 geformten Mulden 12 mit Produkt 13 befüllt.

Die Siegelstation 4 kann eine Kammer bilden, in der die Mulden 12 evakuiert werden und/oder die Atmosphäre in den Mulden 12 vor dem Versiegeln zum Beispiel durch Gasspülen mit einem Austauschgas oder mit einem Gasgemisch ersetzt werden kann.

Die Querschneideeinrichtung 5 ist als Stanze ausgebildet, die die Folie 9 und die Oberfolie 11 in einer Richtung quer zur Produktionsrichtung P zwischen benachbarten Mulden 12 durchtrennt. Dabei arbeitet die Querschneideeinrichtung 5 derart, dass die Folie 9 nicht über ihre gesamte Breite aufgetrennt wird, sondern zumindest in einem Randbereich nicht durchtrennt wird. Dies ermöglicht einen kontrollierten Weitertransport durch die Vorschubeinrichtung.

Die Längsschneideeinrichtung 6 ist in der dargestellten Ausführungsform als eine Messeranordnung ausgebildet, mit der die Folie 9 und die Oberfolie 11 zwischen benachbarten Mulden 12 und am seitlichen Rand der Folie 9 durchtrennt werden, so dass hinter der Längsschneideeinrichtung 6 vereinzelte Verpackungen 14 vorliegen.

Die Tiefziehverpackungsmaschine 1 verfügt ferner über eine Steuerung 15. Sie hat die Aufgabe, die in der Tiefziehverpackungsmaschine 1 ablaufenden Prozesse zu steuern und zu überwachen. Eine Anzeigevorrichtung 16 mit Bedienelementen 17 dient zum Visualisieren bzw. Beeinflussen der Prozessabläufe in der Tiefziehverpackungsmaschine 1 für bzw. durch einen Bediener.

Nach der Formstation 2 ist stromabwärts eine Ultraschalleinrichtung 20 angeordnet, die eine unterhalb der Folie 9 angeordnete Sonotrode 21 umfasst. Die Sonotrode 21 ist über eine Hubeinrichtung 22 an die Mulden 12 der Folie 9 anhebbar, um mit der Folie 9 in Kontakt zu treten. Die Mulde 12 weist eine in der Formstation 2 z. B. als Einkerbung oder Abkantung geformte Sollbruchlinie 23 auf, die als Öffnungshilfe für die Verpackung 14 dient.

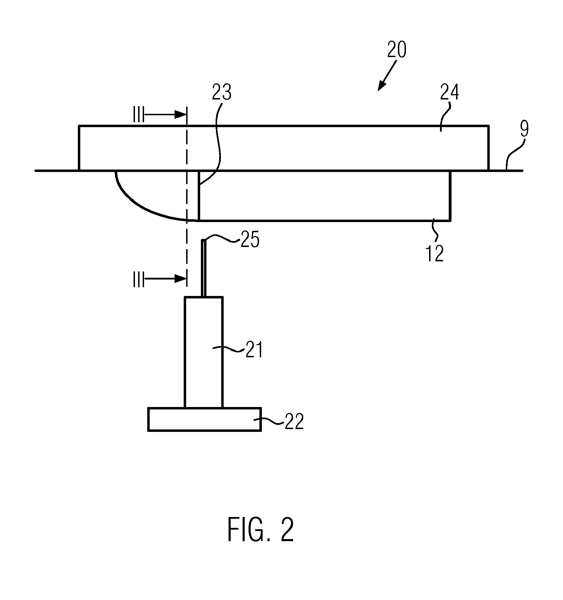

Fig. 2 zeigt die Ultraschalleinrichtung 20 mit der Sonotrode 21 und der Hubeinrichtung 22 in einer Warteposition. Oberhalb der Mulde 12 sowie der Folie 9 ist ein Oberteil 24 vorgesehen. Die Sonotrode 21 weist eine schallabstrahlende Endfläche 25 auf, die eine zur Sollbruchlinie 23 kongruente Form aufweist.

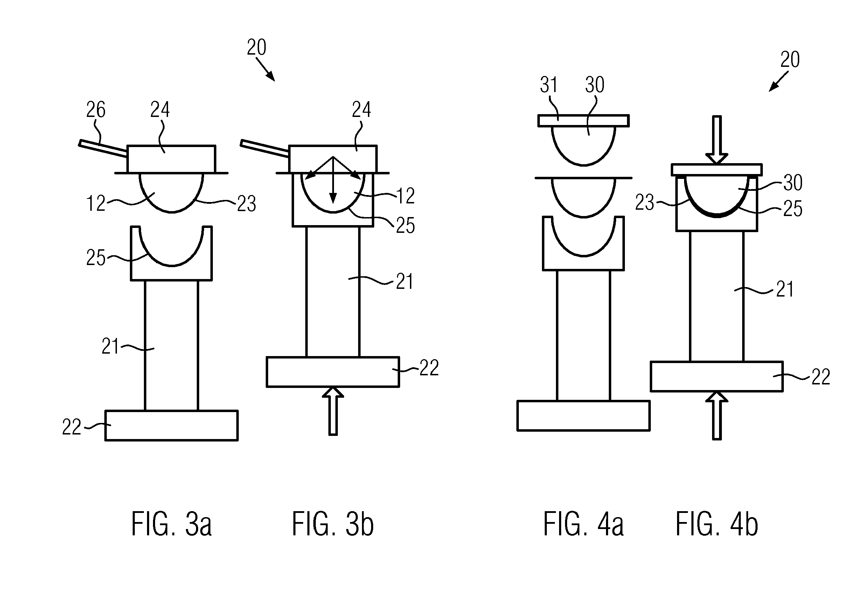

Fig. 3a zeigt eine erste Ausführung der Ultraschalleinrichtung 20 mit der Hubeinrichtung 22 für die Sonotrode 21 in der Warteposition. Das Oberteil 24 weist eine Medienleitung 26 auf, um beispielsweise Druckluft über das Innere des Oberteils 24 in die Mulde 12 bringen zu können. In dieser Darstellung ist die kongruente Form der schallabstrahlenden Endfläche 25 zur U-förmigen Sollbruchlinie 23 gut zu erkennen.

In Fig. 3b ist die Sonotrode 21 mittels der Hubeinrichtung 22 an die Außenseite der Mulde 12 in die Arbeitsposition angehoben worden und die schallabstrahlende Endfläche 25 liegt an der U-förmigen Sollbruchlinie 23 an. Um sicherzustellen, dass die Folie 9 an der schallabstrahlenden Endfläche 25 der Sonotrode anliegt, um während der Ultraschallbearbeitung die Folie 9 an der Sollbruchlinie 23 zu erwärmen, erfolgt oberhalb der Mulde 12 im Oberteil 24 eine mittels Pfeilen dargestellte Druckluftzufuhr. Der dadurch erzeugte Luftdruck drückt die Folie 9 mit einer weitestgehend gleichmäßig verteilten Kraft gegen die schallabstrahlende Endfläche 25 der Sonotrode 21. Durch die von der Sonotrode 21 erzeugte Schwingung und die Reibung der Folie 9 an der schallabstrahlenden Endfläche 25 erfolgt der entsprechende Wärmeeintrag in die Folie 9 entlang der Sollbruchlinie 23, um die kristalline Struktur der Folie 9 an der Sollbruchlinie 23 zu verändern. Die Sprödigkeit der Folie 9 wird dort erhöht und somit das Aufbrechverhalten zum Öffnen der Verpackung 14 verbessert. Die dabei in der Folie 9 entstehende Temperatur liegt unter der Schmelztemperatur der Folie 9, aber je nach Folienmaterial bei wenigstens 140 °C oder 160 °C, um eine Umkristallisation zu erreichen.

Fig. 4a zeigt eine Variante der Ultraschalleinrichtung 20, die anstatt eines Oberteils 24 einen Amboss 30 mit einer weiteren Hubeinrichtung 31 aufweist. Durch die Hubeinrichtung 31 ist der Amboss 30 aus einer Warteposition in eine Arbeitsposition nach unten in die Mulde 12 hinein bewegbar, welches in Fig. 4b gezeigt ist. In der Arbeitsposition wirkt der Amboss 30 als Gegenhalter für die in die Arbeitsposition angehobene Sonotrode 21. Dabei wird die Folie 9 entlang der Sollbruchlinie 23 zwischen der schallabstrahlenden Endfläche 25 der Sonotrode 21 und dem Amboss 23 eingeklemmt, um den Wärmeeintrag in die Folie 9 für eine Umkristallisation entlang der Sollbruchlinie 23 einzubringen.

## Patentansprüche

1. Tiefziehverpackungsmaschine (1), umfassend eine Formstation (2) zum Verformen einer Folie (9) aus Kunststoff, eine Siegelstation (3) und eine Ultraschalleinrichtung (20), wobei die Ultraschalleinrichtung (20) eine Sonotrode (21) aufweist, **dadurch gekennzeichnet, dass** die Ultraschalleinrichtung (20) in der Formstation (2) oder in Produktionsrichtung (P) nach der Formstation (2) und vor der Siegelstation (3) vorgesehen ist.

2. Tiefziehverpackungsmaschine nach Anspruch 1, **dadurch gekennzeichnet, dass** die Ultraschalleinrichtung (20) dazu konfiguriert ist, die in der Formstation (2) verformte Folie (9) lokal zu erwärmen, um die kristalline Struktur der Folie (9) zu verändern.

3. Tiefziehverpackungsmaschine nach einem der vorangehenden Ansprüche, **dadurch gekennzeichnet, dass** die Ultraschalleinrichtung (20) dazu konfiguriert ist, die Folie (9) entlang einer in der Folie (9) geformten Sollbruchlinie (23) zu erwärmen.

4. Tiefziehverpackungsmaschine nach Anspruch 2 oder 3, **dadurch gekennzeichnet, dass** die durch die Sonotrode (21) in der Folie (9) erzeugbare Temperatur unter dem Schmelzpunkt der Folie (9) liegt.

5. Tiefziehverpackungsmaschine nach einem der Ansprüche 2 bis 4, **dadurch gekennzeichnet, dass** die bei der Erwärmung der Folie (9) mittels der Sonotrode (21) erzeugbare Temperatur wenigstens 140°C, vorzugsweise wenigstens 160°C, beträgt.

6. Tiefziehverpackungsmaschine nach Anspruch 3, **dadurch gekennzeichnet, dass** die Sonotrode (21) der Ultraschalleinrichtung (20) eine schallabstrahlende Endfläche (25) aufweist, die mit dem Verlauf der Sollbruchlinie (23) kongruent ist.

7. Tiefziehverpackungsmaschine nach Anspruch 6, **dadurch gekennzeichnet, dass** die Ultraschalleinrichtung (20) ein Oberteil (24) mit einer Drucklufteinrichtung umfasst, wobei das Oberteil (24) oberhalb der Folie (9) angeordnet ist, um die Folie (9) mittels Druckluft an die schallabstrahlende Endfläche (25) der Sonotrode (21) zu drücken.

8. Tiefziehverpackungsmaschine nach Anspruch 6, **dadurch gekennzeichnet, dass** die Ultraschalleinrichtung (20) einen Amboss (30) aufweist, um die Folie (9) zwischen der schallabstrahlenden Endfläche (25) der Sonotrode (21) und dem Amboss (30) zu klemmen.

9. Verfahren zum Betrieb einer Tiefziehverpackungsmaschine (1), die eine Ultraschalleinrichtung (20) umfasst, **dadurch gekennzeichnet, dass** die Ultraschalleinrichtung (20) eine Folie (9) entlang einer zuvor in einer Formstation (2) in der Folie (9) geformten Sollbruchlinie (23) erwärmt, um die kristalline Struktur der Folie (9) entlang der Sollbruchlinie (23) zu verändern.

10. Verfahren nach Anspruch 9, **dadurch gekennzeichnet, dass** die Folie (9) eine Polypropylenfolie, eine Polyethylenterephthalatfolie oder eine amorphe Polyethylenterephthalatfolie ist.

11. Verfahren nach Anspruch 9 oder 10, **dadurch gekennzeichnet, dass** die Folie (9) mittels der Sonotrode (21) auf eine Temperatur von wenigstens 140 °C, vorzugsweise 160 °C, erwärmt wird.

12. Verfahren nach Anspruch 9, 10 oder 11, **dadurch gekennzeichnet, dass** die Erwärmung der Folie (9) mittels der Ultraschalleinrichtung (20) nach dem Erzeugen einer Mulde (12) in die Folie (9) erfolgt.
